# EUROPEAN PATENT SPECIFICATION

(11) **EP 1 537 168 B1**
(45) Date of publication and mention of the grant of the patent: **25.11.2009**
(21) Application number: 03757801.0
(22) Date of filing: 08.09.2003
(51) Int. Cl.: C08J 3/12, C08J 7/06, C04B 16/04, C04B 18/20, B29B 9/02, B29B 9/04, B29B 9/16, B29B 9/08, B29B 17/00

(54) **PET ARTIFICIAL AGGREGATE FOR THE PREPARATION OF LIGHTENED CONCRETE**
KÜNSTLICHE AGGREGATE AUS POLYETHYLENTEREPHTHALAT ZUR HERSTELLUNG VON LEICHTBETON
AGREGAT ARTIFICIEL DE POLYETHYLENE TEREPHTALATE POUR L'ELABORATION DE BETON ALLEGE

(30) Priority: 11.09.2002 IT PA20020016
(43) Date of publication of application: 08.06.2005
(73) Proprietor: Lo Presti, Salvatore, 90135 Palermo (IT)
(72) Inventor: LO PRESTI, Salvatore, I-90135 Palermo (IT); MARTINES, Enrico, I-90135 Palermo (IT)
(74) Representative: Banfi, Paolo
(86) International application number: PCT/EP2003/009958
(87) International publication number: WO 2004/024793

(56) References cited:
- EP-A- 0 904 908
- WO-A-01/55051
- WO-A-02/32988
- WO-A-02/36318
- WO-A-98/50318
- DD-A- 260 466
- DE-A- 19 744 967
- JP-A- 10 245 251
- US-A- 4 506 037
- US-A- 2002 050 233
- DATABASE WPI Section Ch, Week 200008 Derwent Publications Ltd., London, GB; Class L02, AN 2000-090170 XP002272139 & JP 11 292589 A (MARUMAN CORP KK), 26 October 1999 (1999-10-26)

## Description

The present invention provides a novel lightweight PET (polyethylenterephtalate) artificial aggregate for the production of lightened structural and non-structural concrete or materials for building industry, and a process for the preparation thereof.

### Background of the invention

According to the UNI normative, light or lightened concrete has an apparent volume mass of from 200 to 2000 Kg/m³, that is, lower than that of conventional concrete (around 2400 Kg/m³). Important advantages are associated with the use of light concrete, for example, reduced weight and size of building structures, reduced foundation-ground load, reduced seismic actions. Light or lightened concrete is prepared by replacing common aggregates with light aggregates, such as expanded clay, pearlite, vermiculite, rottenstone, lapilli, polystyrene. However, only few light aggregates are suitable for the production of structural concretes, i.e. concrete with compression cubic resistance higher than 15 N/mm².

### Description of the invention

It has now been found that a lightweight artificial aggregate consisting of PET granules provides structural and non structural concrete with properties of lightness, workability, mechanical resistance, durability and low thermal conductivity.

The lightweight artificial aggregate according to the invention is composed of PET granules, coated with fine or coarse sand to improve the adherence between grains and mortar.

In the preparation of the aggregate, PET material from different sources, including recycled PET bottles, is reduced into flakes which are then subjected to a thermal and mechanical process thus forming a resistant, light aggregate. This aggregate is covered or coated with sand, thus forming a "sanded" aggregate suitable for the manufacture of structural concrete.

In a preferred embodiment of the invention, sanded PET aggregates are produced as follows. A defined amount of PET flakes - defending on the desired granulometry and the volume mass of the granule - is placed in a ventilated oven and heated to a temperature of 250-260 °C for a time sufficient for flakes to curl and for their surface to soften, at the same time applying a vibratory and rotational mechanical movement to increase the number of contacts between flakes. When heating is ended, the aggregated flakes are subjected to a controlled pressure that gives them a spheroid shape. The applied compression strength determines the final resistance of the grain. It is important that during the process, PET does not reach complete melting. PET granules are then subjected to surface flaming and rolled on fine or coarse sand to obtain uniform coating of the granules.

Sanded aggregates are separated by size with an appropriate sieve. The aggregates can have different sizes, ranging from 1 to 40 mm, which correspond to different resistance classes. Depending on the compression strength applied during granule formation, the number and size of the empty spaces within grains change and the mechanical resistance changes accordingly.

The aggregates are classified as i) fine, when the size does not exceed 3 mm, ii) medium, between 3 and 7 mm, and iii) coarse, over 7mm.

The heap weight of the PET aggregate depends on the granulometry and compression strength, but it is generally comprised between 100 and 1100 Kg/m³. By way of example, an aggregate in sanded PET with coarse size between 17 and 20 mm and subjected to low compression degree, has a heap weight of approximately 520 Kg/m³.

The lightweight artificial aggregate of the invention allows to prepare concrete with good mechanical resistance and a lower weight/volume ratio (<2000 Kg/m³) than conventional concrete. The concrete produced from PET aggregates possesses insulating properties due to the low thermal conductivity of PET. Examples of concrete/materials for building industry that can be produced from lightweight sanded-PET artificial aggregates include, but are not limited to, lightened structural concrete and concrete of the SCC type (Self-Compacting Concrete).

Since the aggregates can be produced from recycled materials, especially from recycled plastics such as PET bottles, their use in the preparation of concrete according to the present invention may provide an important contribution to waste disposal thus reducing the environmental impact of plastic wastes.

### Description of the Figures

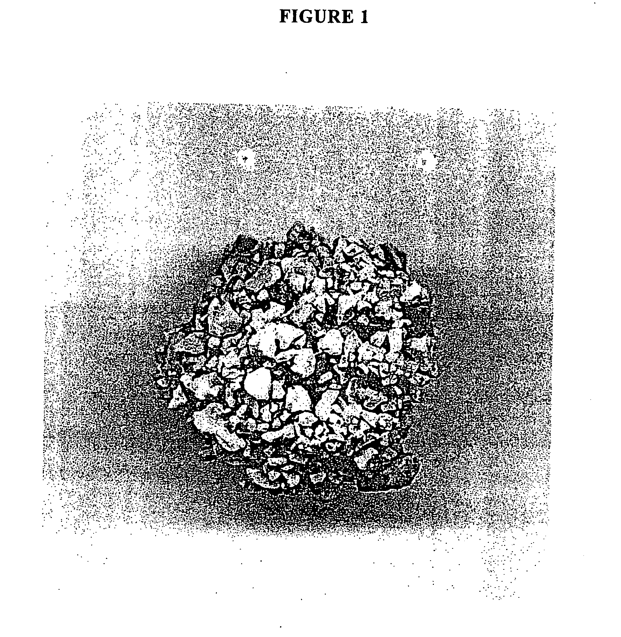

- Fig. 1:: granule of the artificial aggregate in "sanded PET"

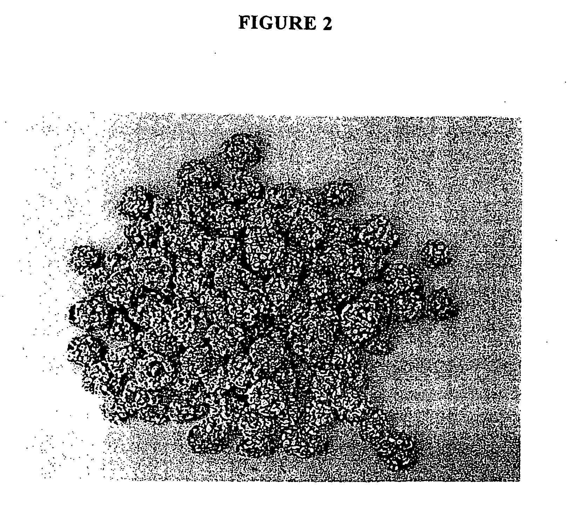

- Fig. 2:: Coarse-size aggregate

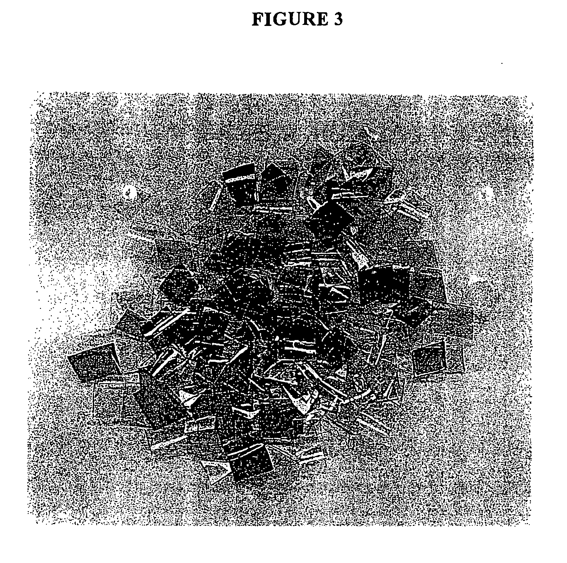

- Fig. 3:: PET "flakes" used in the production of the artificial aggregate

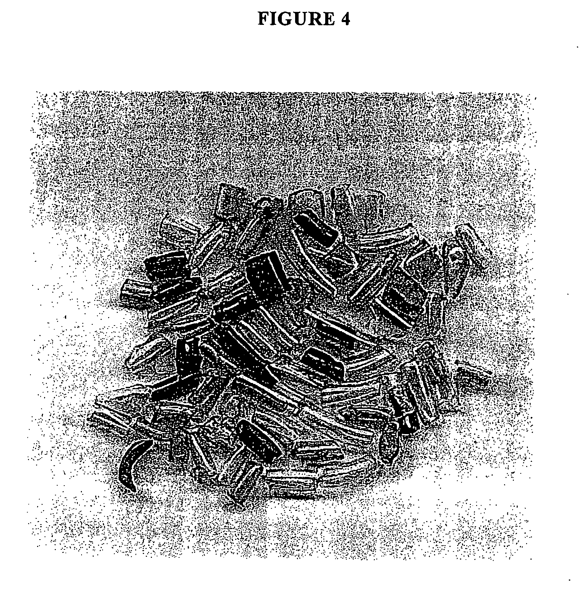

- Fig. 4:: Curled flakes

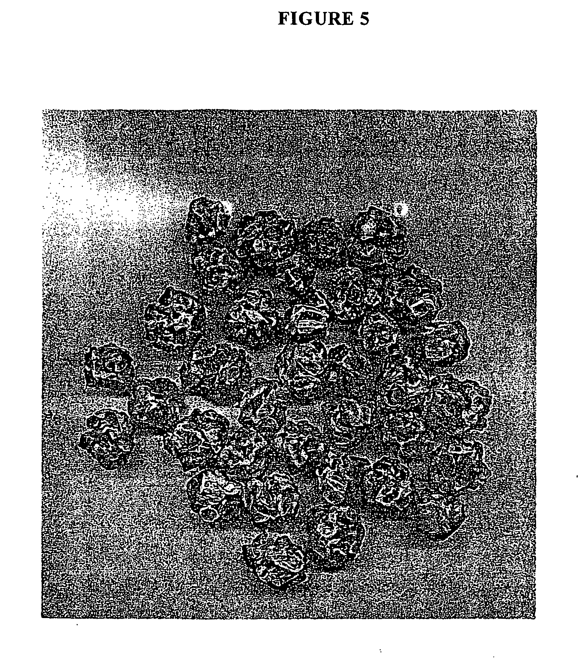

- Fig. 5:: PET granules after forming

### Tables

### Lightweight structural concrete

**Table 1. Properties of sanded lightweight PET aggregate**

| | |
|---|---|
| Diameter (mm) | 13 - 20 |
| Heap weight (Kg/m³) | 520 |
| Grain weight (Kg/m³) | 1316 |
| Surface | sanded |
| Water absorption | negligible |

The used formula is reported in table 2 showing that the most unfavourable condition has been chosen: a small quantity of concrete, a high ratio water/cement, a PET volume percentage equal to the 60% of the entire aggregate.

**Table 2. Mix Design of the structural concrete lightened with light artificial aggregate in "sanded" PET**

| | |
|---|---|
| CEM I 42,5 R | 285 Kg/m³ |
| Aggregate PET (13-20 mm) | 557 Kg/m³ |
| Crusher sand | 761 Kg/m³ |
| Water | 170 l/m³ |
| Super-plasticizer | 2,9 l/m³ |
| Ratio water/cement | 0,6 |
| Consistence | S5 |
| Volume mass | 1780 Kg/m³ |
| Compression resistance (28 dd) | 27 Mpa |

### Lightweight aggregate of big grain size for fillings

**Table 3. Properties of lightweight PET aggregate.**

| | |
|---|---|
| Diameter (mm) | 15 - 25 |
| Heap weight (Kg/m³) | 400 |
| Surface | not sanded |
| Water absorption | Negligible |

The material is resistant, light, non conductive, invariable in time; it resists distorsion also at high temperatures (not far from fusion point) and does not go rotten. If burned, it does not emit toxic gases.

## Claims

1. Lightened material for building industry containing an aggregate of polyethylenterephtalate (PET) granules coated with sand, wherein said aggregate is obtained by the following process:
a) reducing PET material into flakes;
b) subjecting the PET flakes to a thermal and mechanical process by placing the flakes in a ventilated oven and heating to a temperature of 250°C-260 °C for a time sufficient for flakes to curl and for their surface to soften, applying at the same time a vibratory and rotational mechanical movement, to obtain flake aggregates;
c) when heating is ended, subjecting the aggregated flakes to a controlled pressure to give them a spheroid shape;
d) subjecting PET granules to surface flaming and rolling on fine or coarse sand.

2. The use of the lightened material according to claim 1 as structural, non-structural or self-compacting concrete or as thermally and acoustically insulated filling material for building industry.

## Patentansprüche

1. Leichtmaterial für die Bauindustrie, umfassend einen Komplex aus Polyethylenterephtalat(PET)-Granulat, das mit Sand beschichtet ist, wobei der Komplex durch die folgenden Schritte erzeugt wird:
a) Zerkleinern von PET-Material zu Flocken;
b) Thermisches und mechanisches Behandeln der PET-Flocken, wobei die Flocken in einen Ventilationsofen gegeben und auf eine Temperatur von 250° C bis 260° C für eine Zeit aufgeheizt werden, die ausreichend lang ist, dass sich die Flocken kräuseln und ihre Oberfläche weich wird, wobei gleichzeitig eine mechanische Vibrations- und Rotationsbewegung durchgeführt wird, um Flockenkomplexe zu erhalten;
c) wenn das Aufheizen beendet ist, Beaufschlagen der Flockenkomplexe mit einem kontrollierten Druck, um ihnen eine kugelförmige Gestalt zu geben;
d) Abflammen der Oberfläche des PET-Granulats und Rollen auf feinem oder grobem Sand.

2. Verwendung des Leichtmaterials nach Anspruch 1 als tragender, nicht-tragender oder selbst verdichtender Beton, oder als thermisch oder akustisch isolierendes Füllmaterial für die Bauindustrie.

## Revendications

1. Matériau allégé pour l'industrie de la construction, contenant un agrégat de granules de poly(téréphtalate d'éthylène) (PET) revêtus de sable, dans lequel ledit agrégat est obtenu par le procédé suivant :
a) réduire le matériau PET en copeaux ;
b) soumettre les copeaux de PET à un traitement thermique et mécanique par disposition des copeaux dans un four ventilé et chauffé à une température de 250 °C à 260 °C pendant un temps suffisant pour que les copeaux ondulent et pour que leur surface ramollisse, en appliquant en même temps un mouvement mécanique rotationnel et vibratoire, pour obtenir des agrégats de copeaux ;
c) quand le chauffage est terminé, soumettre les copeaux agrégés à une pression contrôlée pour leur donner une forme sphéroïdale ;
d) soumettre les granules de PET à une combustion en surface et à un laminage sur du sable fin ou grossier.

2. Utilisation du matériau allégé selon la revendication 1 en tant que béton de charpente, non structurel ou autoplaçant, ou en tant que matériau de remplissage thermiquement et acoustiquement isolé pour l'industrie de la construction.
